# FASCICULE DE BREVET EUROPEEN

(11) **EP 2 880 969 B1**
(45) Date de publication et mention de la délivrance du brevet: **02.11.2016**
(21) Numéro de dépôt: 14306928.4
(22) Date de dépôt: 01.12.2014
(51) Int. Cl.: A01B 39/18

(54) **Dispositif de binage destiné à être tracté, comprenant un parallélogramme déformable portant au moins un élément de binage**
Bodenauflockerungsvorrichtung, die zum Ziehen bestimmt ist und ein verformbares Parallelogramm umfasst, das mit mindestens einem Auflockerungselement ausgestattet ist
Hoeing device intended for being towed, comprising a deformable parallelogram supporting at least one hoeing element

(30) Priorité: 06.12.2013 FR 1362264
(43) Date de publication de la demande: 10.06.2015
(73) Titulaire: SARL Dominique Coulot, 86340 Vernon (FR)
(72) Inventeur: Coulot, Dominique, 86340 Vernon (FR)
(74) Mandataire: Gicquel, Frédéric

(56) Documents cités:
- DE-A1- 4 115 653
- FR-A- 1 268 503
- FR-A2- 2 622 386

## Description

Le domaine de l'invention est celui de la conception et de la fabrication des machines agricoles. Plus précisément, l'invention concerne un dispositif de binage destiné à être tracté par un véhicule, conçu en particulier mais non exclusivement pour le travail des sols durs.

Le binage est une opération de désherbage au voisinage de plantations, visant à favoriser le développement desdites plantations, ceci en éliminant le captage parasite de l'eau par les mauvaises herbes et en optimisant la pénétration de l'eau dans le sol en direction des racines des plantations.

Pour l'agriculture, des matériels de binage ont été développés pour être spécifiquement adaptés aux cultures semées en ligne (maïs, betterave...), permettant d'effectuer le binage entre les rangs de plans fraîchement sortis de terre, éventuellement simultanément entre plusieurs lignes de plants.

Actuellement, on distingue principalement deux types de bineuse, à savoir, les bineuses à dents et les bineuses à étoiles. Dans les deux cas, le principe est le même : des éléments de binage travaillent entre les lignes de culture de façon à pénétrer de quelques centimètres la terre, en vue de passer sous les racines ou au travers de celles-ci et d'arracher les mauvaises herbes, ceci en laissant derrière le passage de la bineuse une série de sillons.

Dans certains cas, le travail de la bineuse est rendu particulièrement difficile, soit du fait de la dureté du sol (sol particulièrement sec) soit du fait de la présence de cailloux.

Or, en présence de ces sols durs, la difficulté principale est de parvenir à garder les éléments de binage dans la terre, alors que ceux-ci ont naturellement tendance à s'en retirer, du fait d'un retrait vers le haut du dispositif de binage.

En effet, selon une conception classique des bineuses, les éléments de binage sont portés par la poutre inférieure (horizontale) d'un parallélogramme déformable, la poutre inférieure étant reliée à la poutre supérieure du parallélogramme par deux bielles inclinées vers l'avant (selon le sens de déplacement de la bineuse), en allant de la poutre inférieure vers la poutre supérieure.

FR-A-2 622 386 décrit une bineuse selon le préambule de la revendication 1.

En pratique, avec une telle conception, lorsque la bineuse rencontre un frein ou un obstacle, les éléments de binage exercent une force vers l'arrière sur la poutre inférieure, qui a tendance à basculer vers l'arrière par rapport à la poutre supérieure, se traduisant par un déplacement vers le haut des éléments de binage (d'où leur retrait du sol). Sur le plan cinématique, cela s'explique par le fait que l'extrémité supérieure des biellettes est fixe sur la poutre supérieure, tout en constituant un axe de pivotement autour duquel la biellette tourne selon un déplacement en arc de cercle.

Pour éviter ce phénomène de retrait, une solution répandue consiste à alourdir le parallélogramme de la bineuse pour maintenir les dents dans le sol.

Toutefois, cette solution ne donne pas toujours entière satisfaction, et trouve en tout état de cause ses limites en présence de sols particulièrement durs.

L'invention vise notamment à pallier cet inconvénient de l'art antérieur.

Plus précisément, l'invention a pour objectif de proposer un dispositif de binage qui assure le maintien des éléments de binage dans le sol en toutes circonstances, notamment lors du travail de terrains durs.

Cet objectif, ainsi que d'autres qui apparaîtront par la suite, est atteint grâce à l'invention qui a pour objet un dispositif de binage destiné à être tracté par un véhicule par l'intermédiaire d'un bâti couplé à un parallélogramme déformable, un organe de liaison étant intercalé entre le bâti et le parallélogramme déformable, lequel comprend une poutre supérieure et une poutre inférieure portant au moins un outil de binage ainsi que des moyens de roulement au sol, lesdites poutres étant reliées par au moins une paire de bielles, caractérisé en ce que lesdites bielles s'étendent d'une poutre à l'autre en étant inclinée, de la poutre supérieure à la poutre inférieure, vers l'avant selon le sens de déplacement en avant du dispositif, et en ce l'organe de liaison présente un point d'ancrage avec le parallélogramme situé à une hauteur inférieure ou égale à celle de la poutre inférieure.

Ainsi, contrairement à l'art antérieur, l'orientation des bielles reliant la poutre supérieure à la poutre inférieure du parallélogramme portant les éléments de binage est inversée par rapport au parallélogramme classiquement mis en oeuvre selon l'art antérieur. En effet, l'orientation vers l'avant des bielles en allant de la poutre supérieure à la poutre inférieure, tend à faire réagir le parallélogramme lors du travail d'un terrain dur ou en présence d'obstacle de telle sorte que la poutre inférieure pivote vers l'arrière du dispositif. Un tel pivotement tend à écarter la poutre inférieure de la poutre supérieure, ce qui se traduit par un déplacement vers le bas de la poutre inférieure qui tend à maintenir les éléments de binage dans le sol, voire à augmenter légèrement leur distance de pénétration dans le sol.

Ainsi, contrairement à l'art antérieur, les éléments de binage ne se retirent pas du sol en cas de terrain dur ou d'obstacle mais au contraire, maintiennent, voire augmentent, leur niveau de profondeur dans le sol en cas de résistance notable.

En outre, la mise en oeuvre d'un organe de liaison entre le bâti du dispositif et le parallélogramme déformable avec un point d'ancrage à une hauteur inférieure ou égale à celle de la poutre inférieure combine ses effets avec ceux du parallélogramme déformable agencé de la façon décrite précédemment. La combinaison de ces effets permet d'obtenir un comportement dynamique optimal du dispositif de binage quant à sa capacité à maintenir voire renforcer la présence des éléments de binage dans le sol.

Préférentiellement, l'organe de liaison présente un point d'ancrage sous la poutre inférieure.

Une telle caractéristique permet d'assurer voire d'améliorer le comportement dynamique telle que mentionnée précédemment.

Bien entendu, il est possible de déporter le point d'ancrage sous le niveau de la poutre inférieure, ceci sans sortir du cadre de l'invention.

Selon une solution avantageuse, le moyen de roulement au sol est constitué par au moins une roue de terrage montée en partie avant du parallélogramme déformable.

Un tel positionnement de la roue de terrage contribue également au comportement dynamique du dispositif de binage.

Avantageusement, la poutre supérieure est montée dans une position déterminée en hauteur par rapport au bâti. Dans ce cas, le dispositif comprend préférentiellement des moyens de réglage en hauteur de la position de la poutre supérieure par rapport à la poutre inférieure.

On peut de cette façon régler la profondeur de pénétration du ou des éléments de binage dans le sol.

Pour cela, ledit organe de liaison présentant un point d'ancrage sur le parallélogramme situé à une hauteur inférieure ou égale à celle de la poutre inférieure comprend au moins un flanc dont une extrémité présente un moyen de fixation sur le bâti et dont l'autre extrémité s'étend au niveau dudit point d'ancrage.

Selon une solution avantageuse, ledit organe de liaison présente une paire de flancs s'étendant de part et d'autre du parallélogramme déformable et solidarisés entre eux par au moins une entretoise.

Dans ce cas, lesdits moyens de réglage s'étendent entre ladite entretoise et la poutre supérieure.

Selon une solution avantageuse, les moyens de réglage sont constitués par un ensemble écrous/tiges filetées.

Un tel moyen de réglage s'avère particulièrement simple de mise en oeuvre et d'utilisation.

Selon un mode de réalisation préféré, lesdits moyens de réglage sont couplés à au moins une jambe solidarisée par l'une de ses extrémités à la poutre supérieure et reliée de façon articulée par l'autre au point d'ancrage.

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés parmi lesquels :
- la figure 1 est une vue de côté d'un dispositif de binage selon l'invention ;
- la figure 2 est une vue de dessus d'un dispositif de binage selon l'invention ;
- la figure 3 est une vue d'un ensemble incluant une série de dispositifs de binage selon l'invention.

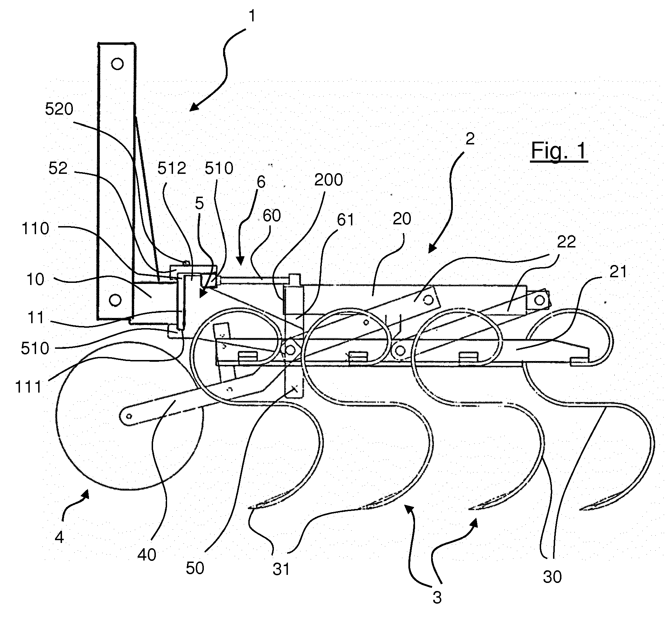

Tel qu'illustré par la figure 1, un dispositif de binage destiné à être tracté par un véhicule comprend :
- un bâti 1, susceptible d'être couplé à un véhicule tel qu'un tracteur agricole ;
- un parallélogramme déformable 2, couplé au bâti ;
- un organe de liaison intercalé entre le bâti et le parallélogramme déformable, assurant la transmission de l'effort de traction du bâti vers le parallélogramme déformable.

Le parallélogramme déformable est constitué par un ensemble comprenant :
- une poutre supérieure 20 ;
- une poutre inférieure 21 ;
- une paire de bielles 22, chacune reliée de façon articulée par l'une de ses extrémités à la poutre supérieure et, par l'autre de ses extrémités, à la poutre inférieure.

Tel que cela apparaît sur la figure 1, la poutre inférieure 21 porte :
- une pluralité d'outils de binage 3 ;
- des moyens de roulement au sol du dispositif, constitué en l'occurrence par une roue de terrage 4 portée par un bras 40 solidarisé au parallélogramme en partie avant de celui-ci, en s'étendant à partir de la poutre inférieure en direction de l'avant du dispositif de façon à positionner la roue de terrage 4 sensiblement à l'aplomb du bâti 1 selon le présent mode de réalisation.

Selon un mode de réalisation préféré, les outils de binage sont constitués par des dents 31 présentes à l'extrémité d'organes élastiquement déformables 30 prenant la forme d'un S. Ces organes en S sont d'un type connu et permettent d'engendrer un phénomène de vibrations au niveau de la dent dans le sol.

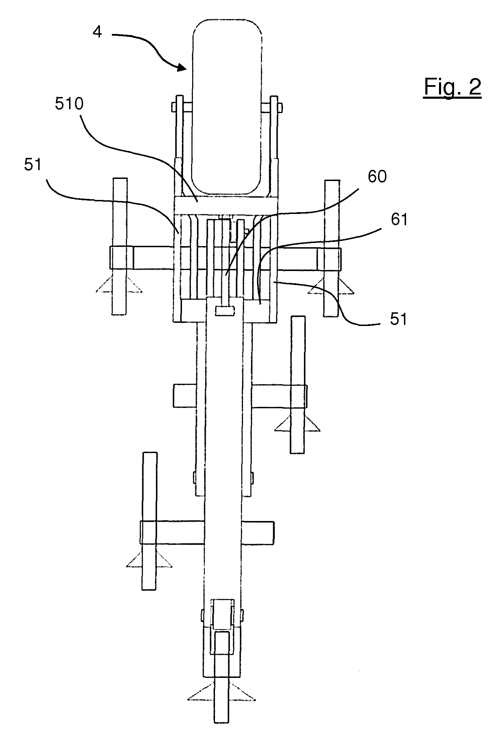

De plus, tel que cela apparaît sur la figure 2, le dispositif de binage peut présenter une série d'outil de binage dont le nombre peut varier autant que de besoin.

Selon un mode de réalisation illustré par la figure 2, le dispositif porte cinq outils de binage, dont un positionné dans l'alignement des poutres du parallélogramme déformable, tandis que les autres sont portés chacun par un bras 30, de façon à décaler latéralement progressivement les outils de binage en allant de la dent alignée sur les poutres du parallélogramme déformable vers la ou les dents à l'autre extrémité du dispositif.

Selon le principe de l'invention, le parallélogramme déformable du dispositif est constitué de la façon suivante : les bielles 22 s'étendent d'une poutre à l'autre en étant inclinée vers l'avant selon le sens de déplacement en avant du dispositif (ou en d'autres termes en direction du bâti du dispositif), ceci de la poutre supérieure à la poutre inférieure. Il en résulte que chaque bielle présente une extrémité arrière articulée sur la poutre supérieure 20 et une extrémité avant articulée sur la poutre inférieure 21.

En outre, l'organe de liaison 5 reliant le bâti et le parallélogramme déformable du dispositif présente un point d'ancrage 50 avec le parallélogramme, ce point d'ancrage étant situé à une hauteur inférieure ou égale à celle de la poutre inférieure.

Ainsi, avec un dispositif selon l'invention, partant d'une configuration telle que celle illustrée par la figure 1 dans laquelle la poutre supérieure et la poutre inférieure présentent entre elles un écartement de base correspondant à une profondeur des outils de binage dans le sol (et dans laquelle les dents occupent une position en hauteur sous le niveau de la roue de terrage 4), lorsque le dispositif évolue en terrain dur et/ou rencontre un obstacle (de nature à provoquer le phénomène décrit ci-après), les éléments du dispositif vont réagir de la façon suivante :
- la roue de terrage va conserver voire augmenter son appui à la surface du sol, maintenant la poutre inférieure du parallélogramme à une hauteur prédéterminée ;
- la résistance s'exerçant sur la ou les dents des outils de binage va provoquer un basculement de la poutre inférieure vers l'arrière du dispositif (les bielles 22 pivotant autour de leur articulation sur la poutre supérieure, décrivant au niveau de leur articulation sur la poutre inférieure un arc de cercle vers l'arrière du dispositif), se traduisant par une « ouverture » du parallélogramme déformable tendant à abaisser la poutre inférieure par rapport à la poutre supérieure ;
- l'organe de liaison maintient son effort de traction au niveau de son point d'ancrage 50 sur le parallélogramme déformable, impliquant une poursuite du déplacement vers l'avant du dispositif de binage avec une force sur la poutre inférieure qui s'oppose en partie à l'ouverture du parallélogramme tout en autorisant légèrement celle-ci.

Le maintien des dents des outils de binage à une profondeur voulue dans le sol est donc maintenu, voire légèrement augmenté en cas de sol dur ou d'obstacle dans le sol.

On note que la poutre supérieure 20 est montée sur le dispositif à une hauteur prédéterminée par rapport au bâti, l'écartement entre la poutre supérieure et la poutre inférieure pouvant être réglé pour faire varier la profondeur de pénétration des outils de binage dans le sol, ceci par l'intermédiaire de moyens de réglage en hauteur décrits plus en détails par la suite.

En référence aux figures 1 et 2, l'organe de liaison 5 se compose, selon le présent mode de réalisation, de deux flancs latéraux 51 solidarisés entre eux par l'intermédiaire d'une entretoise 510, et s'étendant d'une première extrémité présentant des moyens de fixation sur le bâti jusqu'à une deuxième extrémité, opposée longitudinalement à la première, au niveau duquel est présenté le point d'ancrage 50 sous la poutre inférieure.

Tel qu'illustré par la figure 1 le bâti présente une poutre transversale 10 sur laquelle est fixée, du côté de l'organe de liaison, une plaque 11 dépassant en hauteur de la poutre transversale 10 au-dessus et en-dessous de celle-ci de façon à former un rebord supérieur 110 et un rebord inférieur.

Les flancs 51 de l'organe de liaison présentent quant à eux :
- une cavité 511 en partie inférieure destinée à venir loger le rebord inférieur 111 de la plaque 11 du bâti ;
- un rebord supérieur 512, consolidé par l'entretoise 510 sous forme d'un barreau, définissant ensemble une tête de fixation.

On note que les flancs 51 de l'organe de liaison s'étendent de part et d'autre du parallélogramme déformable.

Pour assurer la fixation de l'organe de liaison sur le bâti, on présente les flancs 51 de façon à engager le rebord inférieur de la poutre 11 à l'intérieur de la cavité 511 en partie inférieure des flancs, puis on vient rapporter un U 52 qui vient coiffer la tête de fixation des flancs de l'organe de liaison ainsi que le rebord supérieur de la plaque 11. La solidarisation de l'ensemble est assurée par une vis 520 qui vient maintenir et serrer le U sur le bâti.

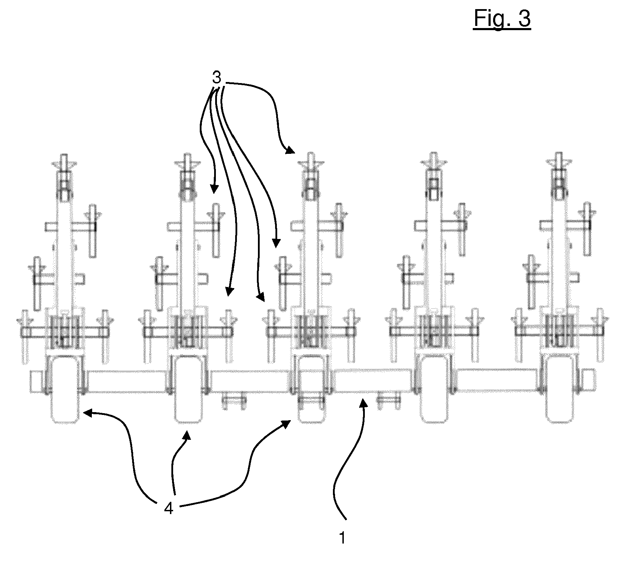

On note qu'un tel montage s'avère particulièrement avantageux dans le cas d'un ensemble tel que celui illustré par la figure 3, dans lequel le bâti porte une série de dispositifs de binage selon l'invention (en l'occurrence cinq dispositifs). En effet, lorsqu'au moins deux dispositifs de binage selon l'invention sont montés sur le bâti, il devient utile de pouvoir ajuster l'écartement entre eux des dispositifs de binage, de façon à adapter leur position par rapport à la position des espaces entre les rangs de plantation. Ceci est donc obtenu avec le système de montage de l'organe de liaison décrit précédemment, qui permet en desserrant simplement la vis 520 de faire coulisser l'organe de liaison sur la plaque 11 du bâti en vue d'adapter la position du dispositif de binage correspondant.

Par ailleurs, selon le présent mode de réalisation, les moyens de réglage en hauteur de la poutre supérieure par rapport à la poutre inférieure comprennent un ensemble écrous/tiges filetées 60, la tige filetée étant couplée par l'une de ses extrémités à la poutre supérieure et par l'autre de ses extrémités à l'entretoise reliant les flancs 51 de l'organe de liaison.

De plus, l'extrémité avant 200 de la poutre supérieure est couplée à une jambe 61 (la poutre supérieure et la jambe 61 étant solidarisées par soudage), reliée de façon articulée par son autre extrémité au point d'ancrage 50 (qui est, selon le présent mode de réalisation, positionné sous la poutre inférieure, mais qui peut être également être prévu directement sur la poutre inférieure).

Ainsi, en modifiant la distance entre l'extrémité avant 200 dans la poutre supérieure et l'entretoise reliant les flancs de l'organe de liaison, on peut faire pivoter la jambe 61 autour du point d'ancrage, ce qui va se traduire par un déplacement d'avant en arrière (ou inversement) de la poutre supérieure qui, par l'intermédiaire des bielles 22, va modifier la position en hauteur de la poutre inférieure par rapport à la poutre supérieure qui elle est en position en hauteur fixe par rapport au bâti. En d'autres termes, le déplacement de la jambe 61 déforme le parallélogramme déformable, ce qui modifie les positions relatives en hauteur des poutres inférieure et supérieure.

## Revendications

1. Dispositif de binage destiné à être tracté par un véhicule par l'intermédiaire d'un bâti (1) couplé à un parallélogramme déformable (2), un organe de liaison (5) étant intercalé entre le bâti et le parallélogramme déformable, lequel comprend une poutre supérieure (20) et une poutre inférieure (21) portant au moins un outil de binage (3) ainsi que des moyens de roulement au sol, lesdites poutres étant reliées par au moins une paire de bielles (22),
**caractérisé en ce que** lesdites bielles (22) s'étendent d'une poutre à l'autre en étant inclinée, de la poutre supérieure (20) à la poutre inférieure (21), vers l'avant selon le sens de déplacement en avant du dispositif, et en ce l'organe de liaison (5) présente un point d'ancrage (50) avec le parallélogramme déformable (2) situé à une hauteur inférieure ou égale à celle de la poutre inférieure (21).

2. Dispositif de binage selon la revendication 1, **caractérisé en ce que** l'organe de liaison (5) présente un point d'ancrage (50) sous la poutre inférieure (21).

3. Dispositif de binage selon l'une des revendications 1 et 2, **caractérisé en ce que** le moyen de roulement au sol est constitué par au moins une roue de terrage (4) montée en partie avant du parallélogramme déformable (2).

4. Dispositif de binage selon la revendication 1, **caractérisé en ce que** la poutre supérieure (20) est montée en une position déterminée en hauteur par rapport au bâti (1).

5. Dispositif de binage selon la revendication 4, **caractérisé en ce qu'**il comprend des moyens de réglage en hauteur de l'écartement entre la poutre supérieure (20) et la poutre inférieure (21).

6. Dispositif de binage selon la revendication 5, **caractérisé en ce que** ledit organe de liaison (5) présentant un point d'ancrage sur le parallélogramme situé à une hauteur inférieur ou égale à celle de la poutre inférieure comprend au moins un flanc (51) dont une première extrémité présente des moyens de fixation sur le bâti et dont l'autre extrémité s'étend au niveau dudit point d'ancrage (50).

7. Dispositif de binage selon l'une quelconque des revendications 1 à 6, **caractérisé en ce que** ledit organe de liaison (5) présente une paire de flancs (51) s'étendant de part et d'autre du parallélogramme déformable (2) et solidarisés entre eux par au moins une entretoise (510).

8. Dispositif de binage selon les revendications 5 à 7, **caractérisé en ce que** lesdits moyens de réglage s'étendent entre ladite entretoise (510) et la poutre supérieure (20).

9. Dispositif de binage selon la revendication 8, **caractérisé en ce que** les moyens de réglage sont constitués par un ensemble écrous/tige filetée (60).

10. Dispositif selon l'une quelconque des revendications 5 à 9, **caractérisé en ce que** lesdits moyens de réglage sont couplés à au moins une jambe (61) solidarisée par l'une de ses extrémités à la poutre supérieure (20) et reliée de façon articulée par l'autre de ses extrémités au point d'ancrage (50).

## Patentansprüche

1. Harkvorrichtung, die dazu bestimmt ist, von einem Fahrzeug über ein Gestell (1) gezogen zu werden, das an ein formbares Parallelogramm (2) gekoppelt ist, wobei ein Verbindungsorgan (5) zwischen das Gestell und das formbare Parallelogramm eingeschoben wird, welches einen oberen Tragebalken (20) und einen unteren Tragebalken (21) umfasst, die zumindest ein Harkwerkzeug (3) tragen, sowie Rollmittel am Boden, wobei die besagten Tragebalken durch zumindest ein Paar an Koppelstangen (22) verbunden sind, **dadurch gekennzeichnet, dass** sich die besagten Koppelstangen (22) von einem Tragebalken zum anderen erstrecken und vom oberen Tragebalken (20) zum unteren Tragebalken (21) in Fahrtrichtung an der Vorderseite der Vorrichtung nach vorne geneigt sind, und dadurch, dass das Verbindungsorgan (5) einen Verankerungspunkt (50) mit dem formbaren Parallelogramm (2) aufweist, der sich auf einer Höhe kleiner oder gleich jener des unteren Tragebalkens (21) befindet.

2. Harkvorrichtung nach Anspruch 1, **dadurch gekennzeichnet, dass** das Verbindungsorgan (5) einen Verankerungspunkt (50) unter dem unteren Tragebalken (21) aufweist.

3. Harkvorrichtung nach einem der Ansprüche 1 und 2, **dadurch gekennzeichnet, dass** das Rollmittel am Boden aus zumindest einer Tiefenführungsrolle (4) gebildet wird, die zum Teil vor dem formbaren Parallelogramm (2) montiert ist.

4. Harkvorrichtung nach Anspruch 1, **dadurch gekennzeichnet, dass** der obere Tragebalken (20) in einer in der Höhe bestimmten Position im Verhältnis zum Gestell (1) montiert ist.

5. Harkvorrichtung nach Anspruch 4, **dadurch gekennzeichnet, dass** sie Mittel zur Höheneinstellen des Abstands zwischen dem oberen Tragebalken (20) und dem unteren Tragebalken (21) umfasst.

6. Harkvorrichtung nach Anspruch 5, **dadurch gekennzeichnet, dass** das besagte Verbindungsorgan (5), das einen Verankerungspunkt auf dem Parallelogramm aufweist, der sich auf einer Höhe kleiner oder gleich jener des unteren Tragebalkens befindet, zumindest eine Flanke (51) umfasst, von der ein erstes Ende Mittel zum Befestigen auf dem Gestell aufweist, und deren anderes Ende sich auf Höhe des besagten Verankerungspunkts (50) erstreckt.

7. Harkvorrichtung nach einem der Ansprüche 1 bis 6, **dadurch gekennzeichnet, dass** das besagte Verbindungsorgan (5) ein Paar an Flanken (51) aufweist, die sich beiderseits des formbaren Parallelogramms (2) erstrecken und durch zumindest einen Abstandhalter (510) fest miteinander verbunden sind.

8. Harkvorrichtung nach den Ansprüchen 5 bis 7, **dadurch gekennzeichnet, dass** sich die besagten Einstellmittel zwischen dem besagten Abstandhalter (510) und dem oberen Tragebalken (20) erstrecken.

9. Harkvorrichtung nach Anspruch 8, **dadurch gekennzeichnet, dass** die Einstellmittel durch eine Einheit bestehend aus Muttern/Gewindestift (60) gebildet werden.

10. Harkvorrichtung nach einem der Ansprüche 5 bis 9, **dadurch gekennzeichnet, dass** die besagten Einstellmittel an zumindest eine Stützstrebe (61) gekoppelt sind, die über eines ihrer Enden fest mit dem oberen Tragebalken (20) verbunden ist, und an ihrem anderen Ende in gelenkiger Form mit dem Verankerungspunkt (50) verbunden ist.

## Claims

1. Hoeing device intended to be towed by a vehicle by means of a frame (1) coupled to a deformable parallelogram (2), a connecting member (5) being interposed between the frame and the deformable parallelogram, which comprises a top beam (20) and a bottom beam (21) carrying at least one hoeing tool (3) as well as means for running on the ground, said beams being connected by at least one pair of links (22), **characterised in that** said links (22) extend from one beam to another while being inclined, from the top beam (20) to the bottom beam (21), forwards in the direction of forward movement of the device, and **in that** the connecting member (5) has a point (50) of anchoring with the deformable parallelogram (2) situated at a height less than or equal to that of the bottom beam (21).

2. Hoeing device according to claim 1, **characterised in that** the connection member (5) has an anchoring point (50) under the bottom beam (21).

3. Hoeing device according the one of claims 1 and 2, **characterised in that** the means for running on the ground consist of at least one topsoil wheel (4) mounted at the front part of the deformable parallelogram (2).

4. Hoeing device according to claim 1, **characterised in that** the top beam (20) is mounted in a determined position in height with respect to the frame (1).

5. Hoeing device according to claim 4, **characterised in that** it comprises means for adjusting for height the separation between the top beam (20) and the bottom beam (21).

6. Hoeing device according to claim 5, **characterised in that** said connecting member (5) having a point of anchoring on the parallelogram situated at a height less than that of the bottom beam comprises at least one flank (51) a first end of which has means for fixing to the frame and the other end of which extends level with said anchoring point (50).

7. Hoeing device according any of claims 1 to 6, **characterised in that** said connecting member (5) has a pair of flanks (51) extending on either side of the deformable parallelogram (2) and secured together by at least one strut (510).

8. Hoeing device according to claims 5 to 7, **characterised in that** said adjusting means extend between said strut (510) and the top beam (20).

9. Hoeing device according to claim 8, **characterised in that** the adjustment means consist of a nut/threaded rod assembly (60).

10. Device according the any of claims 5 to 9, **characterised in that** said adjustment means are coupled to said at least one leg (61) secured by one of its ends to the top beam (20) and connected in an articulated fashion by its other end to the anchoring point (50).
